# EUROPÄISCHE PATENTSCHRIFT

(11) **EP 3 790 819 B1**
(45) Veröffentlichungstag und Bekanntmachung des Hinweises auf die Patenterteilung: **03.07.2024**
(21) Anmeldenummer: 19722619.4
(22) Anmeldetag: 08.05.2019
(51) Int. Cl.: B65G 21/14

(54) **SYSTEM ZUM FÖRDERN VON PRODUKTEN MIT VIRTUELLER BANDVERKÜRZUNG**
SYSTEM FOR CONVEYING PRODUCTS WITH A VIRTUAL SHORTENING OF THE BELT
SYSTÈME DE TRANSPORT DE PRODUITS AVEC RACCOURCISSEMENT VIRTUEL DE LA BANDE

(30) Priorität: 08.05.2018 DE 102018207152
(43) Veröffentlichungstag der Anmeldung: 17.03.2021
(73) Patentinhaber: GEA Food Solutions Germany GmbH, 35216 Biedenkopf-Wallau (DE)
(72) Erfinder: BRUNNQUELL, Norbert, 87452 Altusried (DE); SCHAAFHAUSEN, Wilfried, 88045 Friedrichshafen (DE)
(74) Vertreter: Kutzenberger Wolff & Partner
(86) Internationale Anmeldenummer: PCT/EP2019/061812
(87) Internationale Veröffentlichungsnummer: WO 2019/215225

(56) Entgegenhaltungen:
- WO-A1-2017/151051
- DE-A1- 1 481 347
- DE-A1- 2 025 185
- DE-C1- 3 819 348
- NL-A- 9 400 335

## Beschreibung

Die Erfindung geht aus von einem System zum Fördern von Produkten, insbesondere von Lebensmittelscheiben.

Solche Systeme sind gemeinhin bekannt und werden von der Lebensmittelindustrie als Verarbeitungslinien zum Aufschneiden, Sortieren, Bearbeiten und Verpacken von Lebensmitteln zahlreich eingesetzt. Üblicherweise folgt dem Aufschneiden von Lebensmittelriegeln in Hochleistungs-Slicern die Förderung und Sortierung der aufgeschnittenen Lebensmittelscheiben. Dabei werden die Lebensmittelscheiben zum anschließenden Verpacken in Zeilen zu Formatsätzen sortiert. Das Verpacken geschieht dann formatsatzweise in einer Verpackungsvorrichtung.

Die WO2017/151051 A1 offenbart eine Übergabevorrichtung, wobei die Übergabevorrichtung geeignet ist, Objekte von einem horizontalen Zufuhrförderband aufzunehmen und die Objekte zu einem zweiten horizontalen Abfuhrförderband weiterzuleiten, wobei die Übergabevorrichtung ein erstes Förderband und ein zweites Förderband umfasst, die durch einen ersten oberen Schlitten und einen zweiten unteren Schlitten miteinander verbunden sind, wobei die Übergabevorrichtung geeignet ist, die Objekte in voneinander beabstandete Längsgruppen zu gruppieren, die mindestens ein Objekt umfassen.

Die DE 3819348 C1 offenbart eine Fördervorrichtung mit einem ersten, mit einer ersten Geschwindigkeit angetriebenen Förderband, auf welchem Süßwarenstücke reihenweise in sich quer zur Förderrichtung erstreckenden Reihen mit einem ersten Reihenabstand herangeführt werden, mit einem zweiten, mit einer von der ersten Geschwindigkeit verschiedenen zweiten Geschwindigkeit angetriebenen Förderband, auf das die Reihen von Süßwarenstücken mit einem zweiten, vom ersten Reihenabstand verschiedenen Reihenabstand abgesetzt werden, wobei die einander zugekehrten Umlenkstellen des ersten und des zweiten Förderbands auf einem hin und her beweglich angetriebenen Schlitten angeordnet sind und eine wandernde Übergabestelle bilden. Die NL 9400335 A offenbart ein System, das jedes Produkt, das zufällig auf einem Band ankommt, positioniert und puffert. Die DE 1481347 A1 bezieht sich hingegen auf eine fahrbare Förderbandanlage zum Fördern von Stückgütern wie Säcken, Kartons oder dergleichen. Eine Vorrichtung für eine Förderbahn für Platten und Plattenrohlingen, die aus hintereinander angeordneten Förderern besteht, die mit unterschiedlichen Geschwindigkeiten fördern, ist ferner aus der Druckschrift DE 20 25 185 A1 bekannt.

Zum Sortieren werden üblicherweise Kombinationen von Bändern, Aufreihbändern und Pufferbändern, sogenannte Loader genutzt. Die Kapazität der Loader hängt im Wesentlichen davon ab, über wieviel Strecke die Lebensmittelscheiben mit welcher Geschwindigkeit gefördert werden müssen. Um die Kapazität zu erhöhen ist es also sinnvoll, die Fördertrecke auf der die Lebensmittelscheiben gefördert werden, insbesondere die Förderstrecke auf der die Lebensmittelscheiben mit niedriger Geschwindigkeit transportiert werden, auf ein Minimum zu reduzieren.

Diese Idee stößt jedoch auf technische Grenzen. Setzt beispielsweise die erforderliche Konstruktion zum Aufreihen von zwei auf vier Spuren oder von einer auf drei Spuren ein kürzeres Aufreihband von beispielsweise 400 mm Länge voraus, so benötigt eine Aufreihung von zwei auf drei Spuren ein längeres Aufreihband von beispielsweise 600 mm Länge.

Möchte man nun einen Loader flexibel einsetzen und die Lebensmittelscheiben in unterschiedliche Formate sortieren, so steht man vor dem Problem, dass, wie dargestellt, bei bestimmten Formatkonfigurationen längere Aufreihbänder benötigt werden als bei anderen Formatkonfigurationen, der Loader also zeitweise Lebensmittelscheiben unnötig lang auf Förderstrecken mit langsamer Fördergeschwindigkeit fördert.

Dies reduziert die Kapazität des Loaders bei bestimmten Formatkonfigurationen deutlich.

### Offenbarung der Erfindung

Es ist eine Aufgabe der vorliegenden Erfindung die im Zusammenhang mit dem Stand der Technik genannten Nachteile zu vermeiden und ein System zum Wechsel von Formaten von Produkten, insbesondere von Lebensmitteln, und Fördern von Produkten zur Verfügung zu stellen, welches auf einfache Weise eine Variabilität der Länge der Förderstrecke auf dem Aufreihband bietet.

Die Aufgabe der vorliegenden Erfindung wird gelöst durch ein System zum Wechsel von Formaten von Produkten, insbesondere von Lebensmitteln, gemäß Anspruch 1.

Das vorherige Band ist in Hauptförderrichtung vor dem Aufreihband angeordnet.

Das erfindungsgemäße System hat den Vorteil, dass durch die variierbare Übergabelinie die Länge der Förderstrecke des Aufreihbandes variabel einstellbar, insbesondere also auch verkürzbar, ist. Somit ist es möglich, eine optimale Förderstrecke für die gewünschten Formate einzustellen.

Varrierbar bedeutet im Sinne der vorliegenden Erfindung, dass das vorherige Band und das Aufreihband relativ zueinander, insbesondere entlang der Hauptförderrichtung, verschiebbar, verschwenkbar und/oder in ihrer Lage veränderbar sind. Variierbarkeit kann auch durch unterschiedliche feste Positionen des vorherigen Bandes respektive des Aufreihbandes hergestellt werden, insbesondere kann die Übergabelinie dadurch variierbar sein, dass das vorherige Band und das Aufreihband sich gegenseitig zumindest teilweise überlappend angeordnet werden können. Denkbar dazu ist, dass das System Aufnahmemittel zum Aufnehmen unterschiedlicher vorheriger Bänder aus einer Mehrzahl vorheriger Bänder mit jeweils unterschiedlichen Längen aufweist. Denkbar ist insbesondere, dass das System geeignet ist, ein langes vorheriges Band aufzunehmen und ein kurzes vorheriges Band aufzunehmen, wobei das lange vorherige Band so im System positionierbar ist, dass eine große Überlappung mit dem Aufreihband entsteht und das kurze vorherige Band so im System positionierbar ist, dass eine kleine Überlappung mit dem Aufreihband entsteht.

Vorteilhafte Ausgestaltungen und Weiterbildungen der Erfindung sind den Unteransprüchen, sowie der Beschreibung unter Bezugnahme auf die Zeichnungen entnehmbar.

Erfindungsgemäß ist vorgesehen, dass das vorherige Band ein Zwischenband ist. Das Zwischenband kann eine Strecke überbrücken, auf der kein Transport durch das Aufreihband stattfinden soll. Dabei kann das Zwischenband mit einer deutlich höheren Geschwindigkeit fördern als das Aufreihband. Denkbar ist, dass das Zwischenband in der gleichen Geschwindigkeit fördert wie das Band. Denkbar ist, dass das Zwischenband Produkte vom Band zum Aufreihband fördert.

Gemäß einer bevorzugten weiteren Ausführungsform der vorliegenden Erfindung ist vorgesehen, dass die Länge des Zwischenbandes in Richtung der Hauptförderrichtung einstellbar ist. Dies ermöglicht in vorteilhafter Weise, durch die Einstellung der Länge des Zwischenbandes die Lage der Übergabelinie in Hauptförderrichtung zu variieren.

Denkbar ist, dass die Länge des Zwischenbandes fixierbar ist. Denkbar ist, dass die Länge des Zwischenbandes automatisiert einstellbar ist. Denkbar ist, dass das Zwischenband ein Bandreservoir zum Einstellen der Länge des Zwischenbandes aufweist. Dazu ist denkbar, dass das Zwischenband auf seiner Unterseite nicht entgegengesetzt parallel zur Hauptförderrichtung geführt wird, sondern in einem Winkel zur Hauptförderrichtung mit einer Richtungskomponente entgegen der Hauptförderrichtung und einer Richtungskomponente zum Erdboden hin.

Die Unterseite ist hier die Seite, welche einer Oberseite gegenüberliegt, wobei die Oberseite zum Fördern von Produkten ausgebildet ist.

Gemäß einer bevorzugten weiteren Ausführungsform der vorliegenden Erfindung ist vorgesehen, dass das Zwischenband reversibel abnehmbar ausgebildet ist. Dazu lässt sich das Zwischenband zum System hinzufügen und wieder wegnehmen.

Denkbar ist, dass das System zum Hinzufügen des Zwischenbandes eine Zwischenbandaufnahme aufweist. Dazu ist denkbar, dass die Zwischenbandaufnahme Steuerungsmittel zum Steuern des Zwischenbandes aufweist.

Denkbar ist, dass unterschiedliche Zwischenbänder mit unterschiedlichen Längen hinzufügbar und abnehmbar sind. Dies ermöglicht in vorteilhafter Weise, durch Wechseln der Zwischenbänder die Einstellung der Länge des Zwischenbandes und damit die Lage der Übergabelinie in Hauptförderrichtung zu variieren.

Gemäß der vorliegenden Erfindung ist vorgesehen, dass das Aufreihband um eine Drehachse drehbar ausgebildet ist, wobei die Drehachse im Wesentlichen orthogonal zur Hauptförderrichtung und in der Haupterstreckungsebene des Aufreihbandes positioniert ist.

Dies ermöglicht, dass das Aufreihband in vorteilhafter Weise an der Seite des Zwischenbandes so abzusenken, dass das Zwischenband mit seiner Haupterstreckungsebene in horizontaler Lage positioniert werden kann. Dazu ist vorzugsweise die Drehachse in einem Bereich des Aufreihbandes positioniert, welcher näher am Ende des Aufreihbandes in Hauptförderrichtung ist als am der Hauptförderrichtung entgegengesetzten Ende des Aufreihbandes.

Gemäß einer bevorzugten weiteren Ausführungsform der vorliegenden Erfindung ist vorgesehen, dass das Zwischenband um eine weitere Drehachse drehbar ausgebildet ist, wobei die weitere Drehachse im Wesentlichen orthogonal zur Hauptförderrichtung und in der Haupterstreckungsebene des Zwischenbandes positioniert ist. Dies ermöglicht, dass das Zwischenband an seinem dem Aufreihband zugewandten Ende angehoben werden kann. Wird das Zwischenband an seinem dem Aufreihband zugewandten Ende angehoben und wird das Aufreihband an seinem dem Zwischenband zugewandten Ende abgesenkt, kann das Zwischenband das Aufreihband überlappend positioniert werden, ohne dass starke Steigungen in der Hauptförderrichtung auf der Förderstrecke entstehen.

Denkbar ist, dass eine Drehung des Zwischenbandes um die weitere Drehachse an eine Drehung des Aufreihbandes um die Drehachse gekoppelt ist.

Gemäß einer bevorzugten weiteren Ausführungsform der vorliegenden Erfindung ist vorgesehen, dass das System in einer ersten Konfiguration für eine lange Aufreihbandlänge derart konfiguriert ist, dass ein Ende des Bandes und ein zur Hauptförderrichtung orthogonales Ende des Aufreihbandes und ein zur Hauptförderrichtung orthogonales Ende des Linienverteiles im Wesentlichen anschließend aneinander angeordnet sind, wobei das Band das vorherige Band ist, wobei das Ende des Aufreihbandes die Übergabelinie ist und das System in einer zweiten Konfiguration für eine kurze Aufreihbandlänge derart konfiguriert ist, dass das Aufreihband um die Drehachse gedreht ist, wobei das vorherige Band und das Aufreihband überlappend angeordnet sind, wobei das Ende des vorherigen Bandes die Übergabelinie ist.

Erfindungsgemäß ist das vorherige Band das Zwischenband. Es ist erfindungsgemäß möglich, dass das Aufreihband zum Fördern von Produkten, insbesondere von Lebensmitteln, in einer Hauptförderrichtung vorgesehen ist, wobei das Aufreihband um eine Drehachse um einen Drehwinkel drehbar ausgebildet ist, wobei die Drehachse im Wesentlichen orthogonal zur Hauptförderrichtung und in der Haupterstreckungsebene des Aufreihbandes positioniert ist.

Vorzugsweise ist das Aufreihband ein Aufreihband zur Verwendung in einem System gemäß einer Ausführungsform der vorliegenden Erfindung.

Das Aufreihband ist hervorragend dazu geeignet, in einem System wobei das System aus dem Aufreihband und weiteren Bändern besteht, eine variierbare Übergabelinie und damit eine variierbare Länge der Förderstrecke des Aufreihbandes bereitzustellen.

Gemäß einer bevorzugten Ausführungsform der vorliegenden Erfindung ist vorgesehen, dass das Aufreihband einen Antrieb für eine Drehung um die Drehachse aufweist. Dies ermöglicht eine automatisierte Drehung des Aufreihbandes.

Gemäß einer weiteren bevorzugten Ausführungsform der vorliegenden Erfindung ist vorgesehen, dass die Drehachse im in Hauptförderrichtung hinteren Drittel des Aufreihbandes, vorzugsweise im in Hauptförderrichtung hinteren Fünftel des Aufreihbandes, insbesondere im Bereich des in Hauptförderrichtung hinteren Endes des Aufreihbandes angeordnet ist. Dies ermöglicht ein vorteilhaft gerichtetes und effektives Drehen des Aufreihbandes.

Gemäß einer weiteren bevorzugten Ausführungsform der vorliegenden Erfindung ist vorgesehen, dass das Aufreihband einen Feststellmechanismus aufweist, wobei der Feststellmechanismus geeignet ist, das Aufreihband gegen eine Drehung um die Drehachse zu sichern. Dies stellt den sicheren Betrieb auch unter hohen Lasten des Aufreihbandes sicher.

Ein weiterer Gegenstand der vorliegenden Erfindung ist ein Verfahren zur Verkürzung der effektiven Länge eines Aufreihbandes eines Systems gemäß einer Ausführungsform der vorliegenden Erfindung zum Fördern von Produkten, welches ein vorheriges Band und das Aufreihband aufweist, um eine Verkürzungslänge, wobei das vorherige Band in einer Hauptförderrichtung des Systems um die Verkürzungslänge überlappend positioniert wird. Denkbar ist, dass das Verfahren ein Verfahren zur Verkürzung der effektiven Länge eines Aufreihbandes eines Systems gemäß einem der Ansprüche 1 bis 9 ist. Das erfindungsgemäße Verfahren ermöglicht es, die Förderstrecke über das Aufreihband auf geschickte Weise zu variieren, insbesondere zu verkürzen. Denkbar ist, dass unterschiedliche vorherige Bänder mit unterschiedlichen Längen zum Variieren der Verkürzungslänge verwendet werden können. Denkbar ist aber auch, dass das vorherige Band zum Variieren der Verkürzungslänge in seiner Länge eingestellt wird. Denkbar ist weiterhin, dass das vorherige Band als Zwischenband zwischen ein Band und das Aufreihband positioniert wird.

Gemäß einer bevorzugten Ausführungsform der vorliegenden Erfindung ist vorgesehen, dass das Aufreihband um eine Drehachse gedreht wird, wobei die Drehachse im Wesentlichen orthogonal zur Hauptförderrichtung, in der Haupterstreckungsebene des Aufreihbandes und außerhalb des Bereichs der Überlappung positioniert wird.

Dies ermöglicht auf vorteilhafte Weise durch eine Verschwenkung des Aufreihbandes die geschickte Positionierung des vorherigen Bandes in einer im Wesentlichen waagerechten Ausrichtung seiner Haupterstreckungsebene. Denkbar ist aber auch, dass das vorherige Band um eine Drehachse gedreht wird, wobei die Drehachse im Wesentlichen orthogonal zur Hauptförderrichtung, in der Haupterstreckungsebene des vorherigen Bandes und außerhalb des Bereichs der Überlappung positioniert wird. Ferner ist denkbar, dass das Aufreihband um eine Drehachse gedreht wird, wobei die Drehachse im Wesentlichen orthogonal zur Hauptförderrichtung, in der Haupterstreckungsebene des Aufreihbandes und außerhalb des Bereichs der Überlappung positioniert wird und das vorherige Band um eine Drehachse gedreht wird, wobei die Drehachse im Wesentlichen orthogonal zur Hauptförderrichtung, in der Haupterstreckungsebene des vorherigen Bandes und außerhalb des Bereichs der Überlappung positioniert wird, wobei der Teil des Aufreihbandes im Bereich der Überlappung nach unten, also in Richtung des Erdbodens, verschwenkt wird und der Bereich des vorherigen Bandes im Bereich der Überlappung nach oben, also in der Richtung weg vom Erdboden, verschwenkt wird.

Alle vorstehenden Ausführungen unter "Offenbarung der Erfindung" gelten gleichermaßen für das erfindungsgemäße System und das erfindungsgemäße Verfahren.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen.

### Kurze Beschreibung der Zeichnungen

- Figur 1: zeigt eine schematische Seitenansicht des Systems gemäß einer beispielhaften Ausführungsform der vorliegenden Erfindung in einer Konfiguration für eine lange Aufreihbandlänge.
- Figur 2: zeigt eine schematische Seitenansicht des Systems gemäß einer beispielhaften Ausführungsform der vorliegenden Erfindung in einer Konfiguration für eine kurze Aufreihbandlänge.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

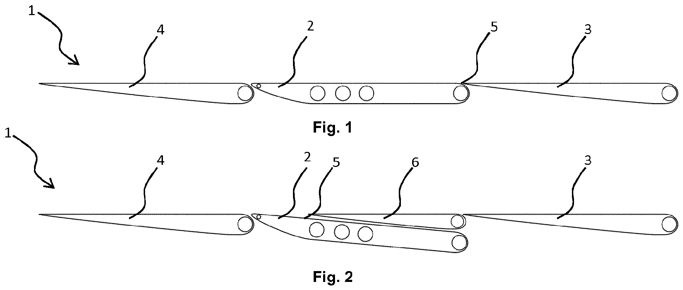

In **Figur 1** ist eine schematische Seitenansicht des Systems 1 gemäß einer beispielhaften Ausführungsform der vorliegenden Erfindung in einer Konfiguration für eine lange Aufreihbandlänge dargestellt. Das System 1 ist ein System 1 zum Fördern und zum Wechsel von Formaten von Lebensmittelscheiben. Die Lebensmittelscheiben werden dabei in der gezeigten Zeichnung von rechts nach links transportiert, welches die Hauptförderrichtung ist.

Das System 1 weist in Hauptförderrichtung das Band 3, das Aufreihband 2 und das weitere Band 4 auf. Die Lebensmittelscheiben werden vom Band 3 über das Band 3 hin zum Aufreihband gefördert. Am Ende des Bandes 3 werden die Lebensmittelscheiben an einer Übergabelinien 5 vom Aufreihband 2 aufgenommen und weiter zum weiteren Band 4 transportiert. Der Transport über das Aufreihband 2 geschieht langsam und über die volle Länge des Aufreihbandes 2.

In **Figur 2** ist eine schematische Seitenansicht des Systems 1 gemäß einer beispielhaften Ausführungsform der vorliegenden Erfindung in einer Konfiguration für eine kurze Aufreihbandlänge dargestellt. Zusätzlich zu dem Band 3, dem Aufreihband 2 und dem weiteren Band 4 weist das System 1 das Zwischenband 6 zwischen dem Band 3 und dem Aufreihband 2 auf.

Wie in der in **Figur 1** gezeigten Konfiguration für eine lange Aufreihbandlänge werden hier Lebensmittelscheiben von der rechten Seite zur linken Seite transportiert. Dabei fördert das Band 3 die Lebensmittelscheiben zum Zwischenband 6. Das Zwischenband 6 fördert die Lebensmittelscheiben mit hoher Geschwindigkeit und überlappt teilweise mit dem Aufreihband 2. An der Übergabelinie 5 werden die Lebensmittelscheiben vom Zwischenband 6 auf das Aufreihband 2 übergeben. Dabei befindet sich die Übergabelinie 5 am Ende des Zwischenbandes 6. Das Zwischenband 6 fördert so die Lebensmittelscheiben schnell über eine Strecke, über die die Lebensmittelscheiben in der in **Figur 1** gezeigten Konfiguration langsam vom Aufreihband 2 gefördert werden. Das Zwischenband 6 verkürzt also das Aufreihband 2 virtuell und sorgt für eine höhere Kapazität des Systems 1.

In der **Figur 2** ist das Aufreihband 2 im eine Drehachse gedreht dargestellt. Das rechte Ende des Aufreihbandes 2 ist dabei nach unten verschwenkt. Dies ermöglicht, das Zwischenband 6 waagerecht in das System 1 zu integrieren.

Das Zwischenband 6 ist leicht austauschbar ins System 1 integriert. Zur Verwendung im System 1 stehen unterschiedliche Zwischenbänder 6 mit unterschiedlichen Längen zur Verfügung. Somit kann durch ein einfaches Austauschen des Zwischenbandes 6 gegen ein anderes Zwischenband 6 die Position der Übergabelinie 5 und damit die virtuelle Verkürzung des Länge des Aufreihbandes 2 variiert werden.

### Bezugszeichenliste

- 1: System
- 2: Aufreihband
- 3: Band
- 4: Weiteres Band
- 5: Übergabelinie
- 6: Zwischenband

## Patentansprüche

1. System (1) zum Wechsel von Formaten von Produkten, insbesondere von Lebensmitteln, und Fördern von Produkten in einer Hauptförderrichtung, aufweisend ein Band (3), ein Aufreihband (2) und ein weiteres Band (4), wobei das Aufreihband (2) in Hauptförderrichtung nach dem Band (3) angeordnet ist, wobei das weitere Band (4) in Hauptförderrichtung nach dem Aufreihband (2) angeordnet ist, wobei das Aufreihband (2) eine Übergabelinie (5) zur Aufnahme von Lebensmitteln von einem vorherigen Band zum Aufreihband (2) aufweist, wobei das vorherige Band als Zwischenband (6) zwischen dem Band (3) und dem Aufreihband (2) positioniert ist, wobei die Übergabelinie (5) in Hauptförderrichtung variierbar ist,
**dadurch gekennzeichnet, dass**
das Aufreihband (2) um eine Drehachse drehbar ausgebildet ist, wobei die Drehachse im Wesentlichen orthogonal zur Hauptförderrichtung und in der Haupterstreckungsebene des Aufreihbandes (2) positioniert ist.

2. System (1) nach Anspruch 1, wobei die Länge des Zwischenbandes (6) in Richtung der Hauptförderrichtung einstellbar ist.

3. System (1) nach einem der Ansprüche 1 bis 2, wobei das Zwischenband (6) reversibel abnehmbar ausgebildet ist.

4. System (1) nach einem der Ansprüche 1 bis 3, wobei das Zwischenband (6) um eine weitere Drehachse drehbar ausgebildet ist, wobei die weitere Drehachse im Wesentlichen orthogonal zur Hauptförderrichtung und in der Haupterstreckungsebene des Zwischenbandes (6) positioniert ist.

5. System (1) nach einem der Ansprüche 1 bis 4, wobei
- das System (1) in einer ersten Konfiguration für eine lange Aufreihbandlänge derart konfiguriert ist, dass ein Ende des Bandes (3) und ein zur Hauptförderrichtung orthogonales Ende des Aufreihbandes (2) und ein zur Hauptförderrichtung orthogonales Ende des Linienverteiles (3) im Wesentlichen anschließend aneinander angeordnet sind, wobei das Band (3) das vorherige Band ist, wobei das Ende des Aufreihbandes (2) die Übergabelinie (5) ist,
- das System (1) in einer zweiten Konfiguration für eine kurze Aufreihbandlänge derart konfiguriert ist, dass das Aufreihband (2) um die Drehachse gedreht ist, wobei das vorherige Band und das Aufreihband (2) überlappend angeordnet sind, wobei das Ende des vorherigen Bandes die Übergabelinie (5) ist.

6. System (1) nach Anspruch 5, wobei das System (1) in der zweiten Konfiguration so konfiguriert ist, dass das vorherige Band das Zwischenband (6) ist.

7. System nach einem der vorhergehenden Ansprüche, wobei das Aufreihband (2) einen Antrieb für eine Drehung um die Drehachse aufweist.

8. System nach einem der vorhergehenden Ansprüche, wobei die Drehachse im in Hauptförderrichtung hinteren Drittel des Aufreihbandes (2), vorzugsweise im in Hauptförderrichtung hinteren Fünftel des Aufreihbandes (2), insbesondere im Bereich des in Hauptförderrichtung hinteren Endes des Aufreihbandes (2) angeordnet ist.

9. System nach einem der vorhergehenden Ansprüche, wobei das Aufreihband (2) einen Feststellmechanismus aufweist, wobei der Feststellmechanismus geeignet ist, das Aufreihband (2) gegen eine Drehung um die Drehachse zu sichern.

10. Verfahren zur Verkürzung der effektiven Länge eines Aufreihbandes (2) eines Systems (1) gemäß einem der vorhergehenden Ansprüche zum Fördern von Produkten, welches ein vorheriges Band und das Aufreihband (2) aufweist, um eine Verkürzungslänge, wobei das vorherige Band in einer Hauptförderrichtung des Systems (1) um die Verkürzungslänge überlappend positioniert wird.

11. Verfahren nach Anspruch 10, wobei das Aufreihband (2) um eine Drehachse gedreht wird, wobei die Drehachse im Wesentlichen orthogonal zur Hauptförderrichtung, in der Haupterstreckungsebene des Aufreihbandes (2) und außerhalb des Bereichs der Überlappung positioniert wird.

## Claims

1. System (1) for changing formats of products, in particular of foodstuffs, and conveying products in a main conveying direction, comprising a belt (3), a lining-up belt (2) and a further belt (4), wherein the lining-up belt (2) is arranged downstream of the belt (3) in the main conveying direction, wherein the further belt (4) is arranged downstream of the lining-up belt (2) in the main conveying direction, wherein the lining-up belt (2) has a transfer line (5) for receiving foodstuffs from a preceding belt onto the lining-up belt (2), wherein the preceding belt is positioned as an intermediate belt (6) between the belt (3) and the lining-up belt (2), wherein the transfer line (5) is variable in the main conveying direction,
**characterized in that**
the lining-up belt (2) is rotatable about an axis of rotation, wherein the axis of rotation is positioned substantially orthogonal to the main conveying direction and in the main extent plane of the lining-up belt (2).

2. System (1) according to Claim 1, wherein the length of the intermediate belt (6) is settable in the direction of the main conveying direction.

3. System (1) according to one of Claims 1 to 2, wherein the intermediate belt (6) is reversibly removable.

4. System (1) according to one of Claims 1 to 3, wherein the intermediate belt (6) is rotatable about a further axis of rotation, wherein the further axis of rotation is positioned substantially orthogonal to the main conveying direction and in the main extent plane of the intermediate belt (6).

5. System (1) according to one of Claims 1 to 4, wherein
- the system (1) in a first configuration for a long lining-up belt length is configured in such a way that an end of the belt (3) and an end, orthogonal to the main conveying direction, of the lining-up belt (2) and an end, orthogonal to the main conveying direction, of the line distributor (3) are arranged substantially adjoining one another, wherein the belt (3) is the preceding belt, wherein the end of the lining-up belt (2) is the transfer line (5),
- the system (1) in a second configuration for a short lining-up belt length is configured in such a way that the lining-up belt (2) is rotated about the axis of rotation, wherein the preceding belt and the lining-up belt (2) are arranged overlapping, wherein the end of the preceding belt is the transfer line (5) .

6. System (1) according to Claim 5, wherein the system (1) in the second configuration is configured such that the preceding belt is the intermediate belt (6) .

7. System according to one of the preceding claims, wherein the lining-up belt (2) has a drive for a rotation about the axis of rotation.

8. System according to one of the preceding claims, wherein the axis of rotation is arranged in the rear third of the lining-up belt (2) in the main conveying direction, preferably in the rear fifth of the lining-up (2) in the main conveying direction, in particular in the region of the rear end of the lining-up belt (2) in the main conveying direction.

9. System according to one of the preceding claims, wherein the lining-up belt (2) has a locking mechanism, wherein the locking mechanism is suitable for securing the lining-up belt (2) against a rotation about the axis of rotation.

10. Method for shortening the effective length of a lining-up belt (2) of a system (1) according to one of the preceding claims for conveying products, which comprises a preceding belt and the lining-up belt (2), by a shortening length, wherein the preceding belt is positioned so as to overlap in a main conveying direction of the system (1) by the shortening length.

11. Method according to Claim 10, wherein the lining-up belt (2) is rotated about an axis of rotation, wherein the axis of rotation is positioned substantially orthogonal to the main conveying direction, in the main extent plane of the lining-up belt (2) and outside the region of the overlap.

## Revendications

1. Système (1) pour changer des formats de produits, notamment de produits alimentaires, et pour transporter des produits dans une direction de transport principale, présentant une bande (3), une bande d'alignement (2) et une autre bande (4), la bande d'alignement (2) étant agencée après la bande (3) dans la direction de transport principale, l'autre bande (4) étant agencée après la bande d'alignement (2) dans la direction de transport principale, la bande d'alignement (2) présentant une ligne de transfert (5) pour recevoir des produits alimentaires d'une bande précédente vers la bande d'alignement (2), la bande précédente étant positionnée en tant que bande intermédiaire (6) entre la bande (3) et la bande d'alignement (2), la ligne de transfert (5) étant variable dans la direction de transport principale, **caractérisé en ce que**
la bande d'alignement (2) est réalisée de manière à pouvoir tourner autour d'un axe de rotation, l'axe de rotation étant positionné essentiellement orthogonalement à la direction de transport principale et dans le plan d'extension principal de la bande d'alignement (2).

2. Système (1) selon la revendication 1, dans lequel la longueur de la bande intermédiaire (6) est réglable dans la direction de la direction de transport principale.

3. Système (1) selon l'une quelconque des revendications 1 à 2, dans lequel la bande intermédiaire (6) est réalisée pour pouvoir être retirée de manière réversible.

4. Système (1) selon l'une quelconque des revendications 1 à 3, dans lequel la bande intermédiaire (6) est réalisée de manière à pouvoir tourner autour d'un autre axe de rotation, l'autre axe de rotation étant positionné essentiellement orthogonalement à la direction de transport principale et dans le plan principal d'extension de la bande intermédiaire (6).

5. Système (1) selon l'une quelconque des revendications 1 à 4, dans lequel
- le système (1) est configuré dans une première configuration pour une longueur de bande d'alignement longue de telle sorte qu'une extrémité de la bande (3) et une extrémité de la bande d'alignement (2) orthogonale à la direction de transport principale et une extrémité du distributeur linéaire (3) orthogonale à la direction de transport principale sont agencées de manière essentiellement adjacente, la bande (3) étant la bande précédente, l'extrémité de la bande d'alignement (2) étant la ligne de transfert (5),
- le système (1) est configuré dans une deuxième configuration pour une longueur de bande d'alignement courte de telle sorte que la bande d'alignement (2) est tournée autour de l'axe de rotation, la bande précédente et la bande d'alignement (2) étant agencées en chevauchement, l'extrémité de la bande précédente étant la ligne de transfert (5).

6. Système (1) selon la revendication 5, dans lequel le système (1) est configuré dans la deuxième configuration de telle sorte que la bande précédente est la bande intermédiaire (6).

7. Système selon l'une quelconque des revendications précédentes, dans lequel la bande d'alignement (2) présente un entraînement pour une rotation autour de l'axe de rotation.

8. Système selon l'une quelconque des revendications précédentes, dans lequel l'axe de rotation est agencé dans le tiers arrière de la bande d'alignement (2) dans la direction de transport principale, de préférence dans le cinquième arrière de la bande d'alignement (2) dans la direction de transport principale, notamment dans la zone de l'extrémité arrière de la bande d'alignement (2) dans la direction de transport principale.

9. Système selon l'une quelconque des revendications précédentes, dans lequel la bande d'alignement (2) présente un mécanisme de blocage, le mécanisme de blocage étant apte à empêcher la bande d'alignement (2) de tourner autour de l'axe de rotation.

10. Procédé de réduction de la longueur effective d'une bande d'alignement (2) d'un système (1) selon l'une quelconque des revendications précédentes pour transporter des produits, qui présente une bande précédente et la bande d'alignement (2), d'une longueur de réduction, dans lequel la bande précédente est positionnée en chevauchement de la longueur de réduction dans une direction de transport principale du système (1) .

11. Procédé selon la revendication 10, dans lequel la bande d'alignement (2) est tournée autour d'un axe de rotation, l'axe de rotation étant positionné essentiellement orthogonalement à la direction de transport principale, dans le plan d'extension principal de la bande d'alignement (2) et à l'extérieur de la zone de chevauchement.
